# DEMANDE DE BREVET EUROPEEN

(11) **EP 0 771 594 A2**
(43) Date de publication de la demande: **07.05.1997**
(21) Numéro de dépôt: 96500037.5
(22) Date de dépôt: 29.03.1996
(51) Int. Cl.: B08B 9/093

(54) **Procédé pour le nettoyage de citernes de véhicules avec traitement du liquide de nettoyage et équipement pour l'effectuer**

(30) Priorité: 30.10.1995 ES 9502106
(71) Demandeur: T.Q.E. RAURICH, S.A., 08840 Viladecans, Barcelona (ES)
(72) Inventeur: Fuste Raurich, Jaime, 08840 Viladecans, Barcelona (ES)
(74) Mandataire: Manresa Val, Manuel

(57) **Abrégé**

Il comporte une première phase dans laquelle après avoir déchargé le produit transporté, un solvant provenant d'un réservoir auxiliaire (4) de la citerne (1) est entraîné, au moyen d'une pompe (5), vers des appareils d'arrosage (3) de celle-ci qui arrosent son intérieur, et une deuxième phase dans laquelle le solvant arrosé plus les charges résiduelles de l'intérieur de cette citerne (1) sont aspirés et ils sont renvoyés au réservoir (4) au moyen de la même pompe (5). Lorsque le solvant de ce réservoir (4) Contient une quantité considérable de charges résiduelles, il est vidé et ledit solvant et les charges résiduelles sont soumis à une opération d'épuration.

Applicable à des citernes ou des cuves (1) de transport de produits tels que résines, encres, graisses ou assimilés.

## Description

Le présent brevet concerne un procédé pour le nettoyage de citernes et le traitement du liquide de nettoyage, notamment applicable à des citernes ou des cuves de véhicules de transport, qui a de remarquables avantages par rapport aux systèmes actuellement utilisés pour ces mêmes fins.

En effet, il est connu que pour les conducteurs de citernes, propriétaires de centres de lavage de citernes et même leurs transporteurs, lorsque lesdites citernes ou cuves contiennent des produits visqueux du type résines, encres, huiles ou graisses, ils sont très difficiles à nettoyer après leur décharge ou vidange et on utilise actuellement des méthodes compliquées, avec un travail long et un coût élevé, tout cela sans tenir compte du déplacement nécessaire jusqu'au centre de lavage.

La présente invention a pour but de faire connaître un nouveau procédé de nettoyage, rapide, bon marché, ainsi que l'équipement correspondant pour exécuter cette méthode, un équipement qui sera incorporé à la propre citerne et avec lequel on peut effectuer ce nettoyage et recirculation du liquide ou solvant employé, pratiquement n'importe où, sans avoir à déplacer le véhicule citerne à un centre spécialisé dans ce genre de nettoyage, qui se trouve très souvent assez loin.

Afin de faciliter la description suivante, il est décrit à la suite un cas de réalisation pratique à titre d'exemple, non limitatif, à laquelle sont annexées deux feuilles de dessins dans lesquels:

La figure 1 illustre une vue schématique d'un camion citerne qui porte incorporé l'équipement pour effectuer le présent procédé, ainsi qu'un détail agrandi de cet équipement dans lequel on a indiqué, au moyen de flèches, un sens de circulation du solvant de nettoyage.

La figure 2 représente ce détail du même équipement, en y indiquant avec des flèches, le sens de circulation de ce solvant après avoir fait le nettoyage.

Et la figure 3 est un schéma représentant un dernier nettoyage de la citerne ainsi que l'épuration du solvant avec des charges résiduelles.

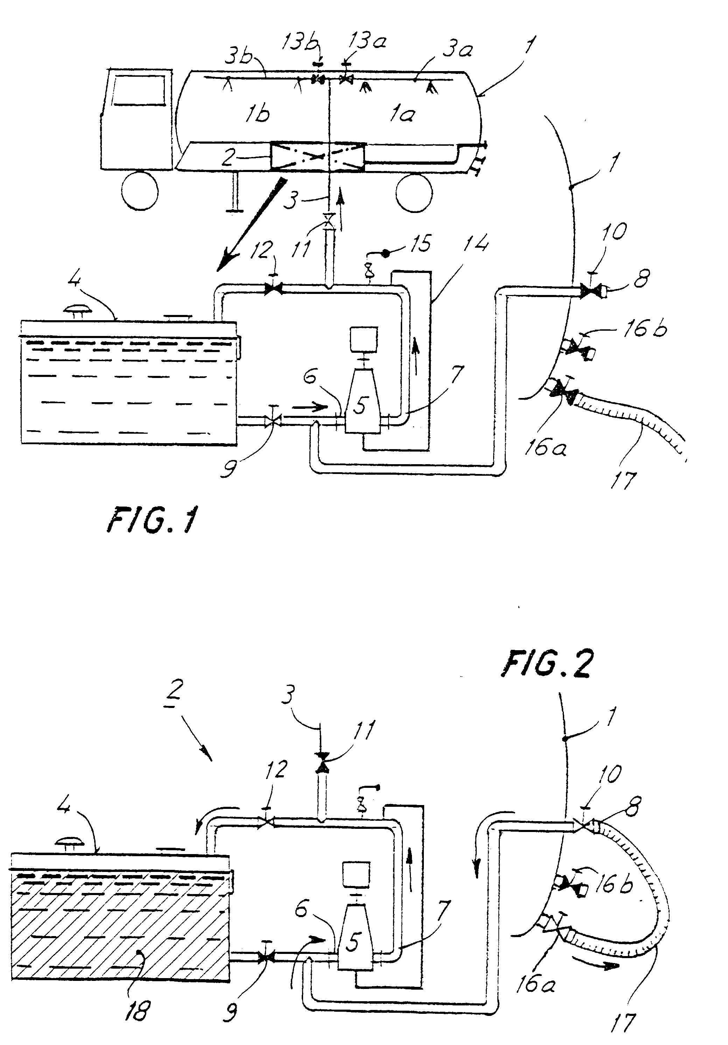

Selon ces figures (fig. 1) on peut apprécier: le camion citerne (1) qui peut avoir, par exemple, deux compartiments (1a, 1b) pour réduire les effets de la houle du produit transporté, comme c'est déjà connu; et ledit équipement (2) qui sera de préférence adossé au corps de ladite citerne (1).

À l'intérieur de la citerne (1) il y aura deux embranchements d'appareils d'arrosage (3a, 3b) un pour chaque compartiment (1a, 1b), avec des soupapes ordinaires respectives (13a, 13b) au début de ceux-ci.

L'équipement (2) de son côté, sera composé d'un réservoir (4) du solvant consistant en un liquide ayant la propriété de diluer, décaper ou détruire les restes de produit transporté; une pompe à impulsion (5) avec un conduit d'aspiration (6) communiquant soit avec ce réservoir (4) soit avec l'entrée (8) dont le raccordement sera expliqué plus loin, et un conduit à impulsion (7) communiquant soit avec le distributeur (3) qui débouche aux embranchements des appareils d'arrosage (3a, 3b) soit audit réservoir (4). Ils sont tous contrôlables par soupapes (9, 10, 11, 12, 13a, 13b).

Complètent l'illustration (fig. 1) le by-pass de la pompe (14), la soupape de sûreté (15) et les soupapes (16a, 16b) des compartiments (1a, 1b) respectivement.

Lors du fonctionnement, le transporteur ou l'opérateur chargé de la citerne , après avoir vidangé au moyen de la manche (17) le produit transporté au lieu et local du client correspondant, procédera au nettoyage du/des compartiments de la citerne (1).

Pour cela (fig. 1) il mettra la pompe (5) en marche, qui aspirera le solvant du réservoir (4) et l'entraînera vers le distributeur (3) et de là vers un embranchement d'appareils d'arrosage (3a) selon le sens des flèches. Évidemment, les soupapes (9, 11, 13a) seront ouvertes tandis que les soupapes (10, 12, 16a, 13b) resteront fermées.

Dès que tout ou partie du réservoir de solvant (4) est passé à l'intérieur d'un compartiment (1a) de la citerne (1) (a travers les appareils d'arrosage) on procédera à le récupérer.

Pour cela (fig. 2) on changera le sens de circulation du solvant en aspirant ledit solvant (avec les résidus) de l'intérieur d'un compartiment (1a) à travers la manche (17) qui aura été raccordée au préalable entre l'entrée (8) et la soupape (16a) de ce compartiment, et en l'entraînant vers le réservoir (4). Les soupapes (10, 16a, 12) seront ouvertes, tandis que les soupapes (16b, 9, 11) seront fermées.

Les mêmes séquences des paragraphes précédents seront appliquées pour le deuxième compartiment (1b) (ou successifs, s'il y en avait plus de deux) avec la précaution de fermer la soupape (13a) de l'embranchement (3a) et d'ouvrir la soupape (13b) de l'embranchement (3b) d'appareils d'arrosage.

L'avantage que représente le présent procédé est évident, avec l'équipement indiqué pour la facilité de nettoyage des citernes, recirculation et mise à profit du solvant, des opérations qui peuvent se faire immédiatement après la décharge du produit transporté, sans avoir à se déplacer à un centre spécialisé de nettoyage de citernes avec l'économie de temps et d'argent qui en découle, naturellement.

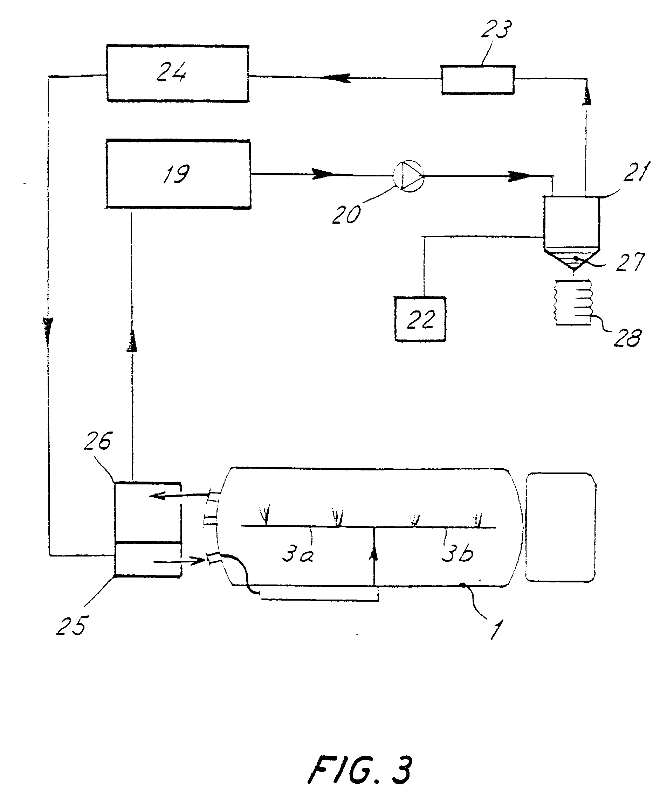

De toutes façons, après plusieurs nettoyages, il faudra épurer le solvant (18) avec des charges résiduelles du réservoir (4) pour cela, on amènera le camion citerne (1) (fig. 3) à un endroit basiquement pourvu d'un réservoir accumulateur de solvant chargé de résidus (19), une pompe à impulsion (20), un réacteur (21) avec l'élément de chauffage (22) correspondant, un refroidisseur du solvant épuré (23), un réservoir principal de solvant distillé ou épuré (24) et un réservoir divisé en deux sections (25, 26) subsidiaires de ces réservoirs principaux, c'est-à-dire, une section (25) pour le solvant épuré et une autre section (26) pour le solvant ayant encore des charges résiduelles.

À cet endroit on fait également un dernier nettoyage du/des compartiment/compartiments de la citerne (1) en entraînant aux appareils d'arrosage (3a, 3b) du solvant propre directement du réservoir (25) et en l'extrayant ensuite au moyen de pompes (non visibles) vers le réservoir auxiliaire (26) de solvant avec charges.

Le sens des flèches indique le cheminement du solvant: du réservoir accumulateur (19) au réacteur (21) au moyen de la pompe (20) et de celui-ci, en passant par le refroidisseur (23) au réservoir principal (24) de solvant épuré et ensuite au réservoir auxiliaire (26). Évidemment, le solvant avec des charges (18) contenu dans le réservoir (4) de l'équipement du camion citerne (1) aura été vidé, de façon conventionnelle, dans le réservoir (25 ou 19) également pour son épuration. Les résidus inutilisables (27) seront ramassés du réacteur (21) avec des bidons ou des récipients appropriés (28) pour les évacuer dans un lieu autorisé.

L'invention, dans son essentialité, peut être mise en oeuvre dans d'autres formes de réalisation qui ne seront différentes qu'en détail de celle qui est indiquée à titre d'exemple uniquement, auxquelles s'étendra également la protection demandée. Ce procédé pour le nettoyage de citernes de véhicules pourra donc être réalisé avec le traitement du liquide de nettoyage et l'équipement pour l'effectuer avec les moyens, composants et accessoires les plus appropriés, car tout cela est compris dans l'esprit des revendications suivantes.

## Revendications

1. Procédé pour le nettoyage de citernes de véhicules avec traitement du liquide de nettoyage et équipement pour l'effectuer, applicable notamment aux véhicules à citernes (1) ayant un ou plusieurs compartiments (1a, 1b), contenant des produits tels que résines, encres, huiles, graisses ou assimilés et chaque compartiment étant doté d'un conduit ayant plusieurs appareils d'arrosage (3a, 3b), essentiellement caractérisé en qu'il comprend:
- une première phase dans laquelle, après avoir déchargé ledit produit, un liquide solvant provenant d'un réservoir auxiliaire (4) de la citerne (1) est entraîné vers ce conduit (3) des appareils d'arrosage qui arrosent l'intérieur du compartiment correspondant (1a) et,
- une deuxième phase dans laquelle sont aspirés le solvant arrosé plus les charges résiduelles de l'intérieur de ce compartiment correspondant (1a) et il est renvoyé audit réservoir auxiliaire (4), ces opérations étant répétées pour les compartiments suivants (1b) de la même citerne (1) et/ou pour un même compartiment (1a).

2. Procédé selon la revendication précédente, caractérisé en ce qu'il comprend une troisième phase dans laquelle, lorsque le solvant (18) de ce réservoir auxiliaire (4) contient une quantité considérable de charges résiduelles, celui-ci se vide et ce solvant ayant des charges résiduelles considérables est soumis à une opération d'épuration avec des moyens conventionnels.

3. Équipement pour effectuer le procédé de la revendication 1, caractérisé en ce que celui-ci est incorporé à la citerne (1) du véhicule et comporte un réservoir auxiliaire (4) de solvant, une pompe à impulsion (5) dotée d'un by-pass (14) et d'une soupape de sûreté (15), avec un circuit d'aspiration (6) qui peut être branché au choix, au moyen de soupapes ordinaires (9, 10, 16a, 16b), audit réservoir (4) ou à un quelconque des compartiments (1a, 1b) de la citerne et avec un circuit à impulsion (7) qui peut être branché au choix, au moyen de soupapes ordinaires (11, 12, 13a, 13b) au conduit (3) des appareils d'arrosage ou audit réservoir auxiliaire (4).
